Europäisches Patentamt

(19) European Patent Office

Office européen des brevets

(11) Publication number: **0 125 350**
**B1**

# (12) EUROPEAN PATENT SPECIFICATION

(45) Date of publication of patent specification: **11.11.87**

(51) Int. Cl.⁴: **G 01 C 21/00**

(21) Application number: **83302368.2**

(22) Date of filing: **26.04.83**

(54) **Guidance system for a moving body viewing its surroundings and correlating.**

(43) Date of publication of application:
**21.11.84 Bulletin 84/47**

(45) Publication of the grant of the patent:
**11.11.87 Bulletin 87/46**

(84) Designated Contracting States:
**AT BE CH DE FR IT LI LU NL SE**

(56) References cited:
**EP-B-0 005 918**
**DE-A-2 914 693**
**DE-A-3 018 607**
**GB-A-2 060 306**

**IEEE TRANSACTIONS ON AEROSPACE AND
ELECTRONIC SYSTEMS, vol. AES-15, no. 1,
January 1979, pages 11-19, New York, USA;
J.S.BOLAND et al.: "Design of a correlator for
real-time video comparisons"**

(73) Proprietor: **GEC AVIONICS LIMITED
Airport Works
Rochester Kent ME1 2XX (GB)**

(72) Inventor: **Brown, George
1, Langford Crescent
Benfleet Essex SS7 3JP (GB)**

(74) Representative: **Hoste, Colin Francis et al
The General Electric Company p.l.c. Central
Patent Department (Chelmsford Office) Marconi
Research Centre West Hanningfield Road
Great Baddow Chelmsford CM2 8HN, Essex (GB)**

Courier Press, Leamington Spa, England.

## Description

This invention relates to guidance systems and is particularly concerned with systems in which a moving body is to be guided to a predetermined location. One method of enabling a body to determine its position is by allowing it to view its surroundings and to compare its field of view with a reference pattern. The process of identifying the viewed scene with a reference pattern is often termed correlation. In principle, correlation, whether it is of a one or two dimensional nature, involves searching for a particular signal or data pattern within a temporal or spatial window in another signal or data pattern. In the present invention, the signals or data patterns represent two-dimensional images and thus one image is being searched for within another image, i.e. the two images are of different sizes, one being a subset of the other.

This aspect of correlation is sometimes termed "scene imaging by area correlation" and it can be used to bring a moving body to a predetermined location and to cause it to follow a predetermined path. It is merely necessary for the body to view its surroundings as it moves, and to compare the viewed scene with reference data relating to localised reference areas along its path. As the viewed scene is periodically correlated with the localised reference areas, the moving body can determine whether it is on the required path or whether it diverges from it, and in the latter case correction can be applied.

It is customary for the reference areas to be very much larger than the field of view so that the guidance system has the task of searching through a relatively large reference area to determine whether any portion of it correlates with its current field of view. A relatively large area is usually used since one can fairly be certain that it will contain a large number of well distributed prominent visual features of a distinctive nature, and furthermore, such an arrangement is able to tolerate relatively large positional errors associated with the movement of the body. Thus even if the body is laterally displaced by a significant extent from the required path, its position can still be determined by providing that its field of view is within the boundaries of the relatively large reference area.

However, such an arrangement is very difficult to implement into a practical system, and moreover if the positional error should be so large that the optical field of view does not fall within the single reference area, guidance of the body is not possible.

Another approach is found in the document DE—A—2914493 (British equivalent is GB—A—2047891 B) which described an aircraft navigation system in which the terrain below the aircraft and a previously made film of the terrain with reference locations are compared. The film and the actual terrain are scanned continuously and analogously, so that the film scanner follows an equivalent track over the film to that of the aircraft terrain, the lateral displacement of reference locations remaining the same (Fig. 4, 5).

The present invention seeks to provide an improved guidance system.

According to this invention a guidance system for guiding, to a predetermined location, a moving body which has means for viewing its surroundings and for correlating therewith a plurality of reference locations which are positioned generally along an expected approach path, at least some of the reference locations being laterally displaced from said path, each reference location having an effective area much smaller than the field of view of the moving body's surroundings, characterised in that the extent of the lateral displacement is reduced with decreasing distance from said predetermined location.

Although it is likely that some of the reference locations will lie on the expected approach path, this is not essential and in practice the actual positions of the reference locations will be largely dictated by the occurrence of distinctive visual features. The means which the body has for viewing its surroundings can take many forms; it may comprise a conventional television camera operating in the visible part of the spectrum, or it may rely on infra-red detectors, or use laser beam scanners.

The kind of viewing means will be chosen in dependence on the nature of the moving body and its surroundings. For example, the moving body may be an aircraft or the like, in which case the terrain over which it flies represents its surroundings. However, the moving body could be the manipulator arm of a robot used in a manufacturing process, in which case the workpiece itself constitutes part of the surroundings.

It is clearly necessary to know in advance the predetermined location and the expected approach path so that suitable reference locations can be chosen, and be encoded in a form which permits their correlation with the viewing means. If the surroundings are constituted by terrain, the reference locations take the form of localised visual features of a distinctive nature, and are chosen such that there is only a single such visual feature within the field of the view of the viewing means at any one time. The localised visual features can be extracted from photographs of the terrain or from suitable maps, whichever is the more convenient. In the case of the manipulator arm, mentioned previously, distinctive visual features can be artificially inserted into the surroundings at convenient positions so as to ease the task of correlation.

Generally the reference locations will be held in the form of data patterns, and will be stored so as to be rapidly compared with the field of view of the scanning means. The data pattern is preferably in the form of binary digits, since in this form it can be used by a digital correlator, but it is, of course, necessary for the viewed scene to be converted to a compatible form of binary digits, prior to correlation.

The predetermined location may be the final destination of the moving body, or it may instead be merely a position on a predetermined and unique path along which the body is subsequently required to move. In this latter case, the plurality of laterally displaced reference locations serve to acquire, or gather, the moving body and allow for the possibility that the body may not approach from the expected direction.

The invention is further described by way of example with reference to the accompanying drawings in which,

Figures 1 and 2 are explanatory diagrams, and

Figure 3 shows, in diagrammatic form, a guidance system in accordance with the invention.

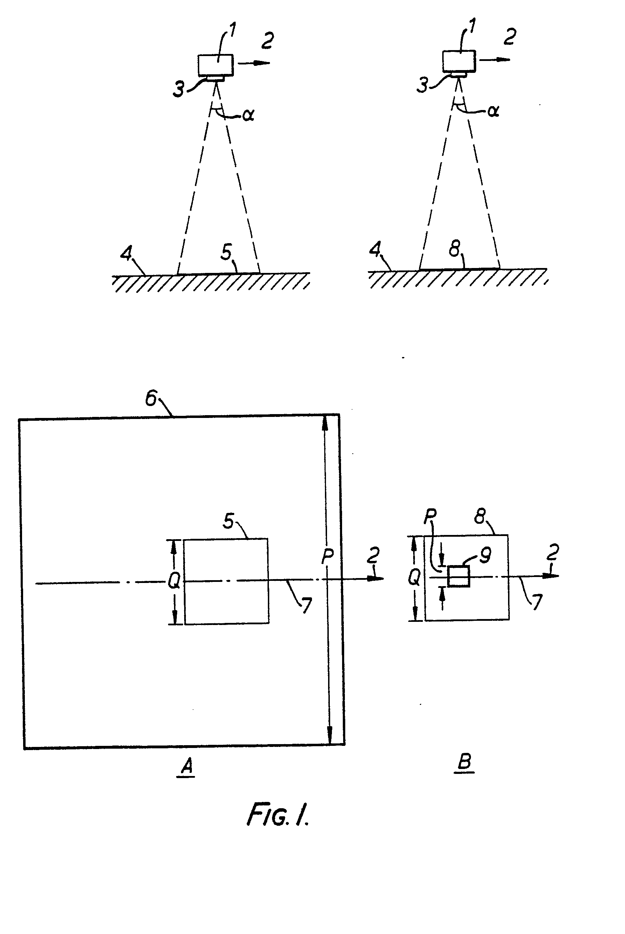

Referring to Figure 1 there are shown therein diagrams which enable one known aspect of the present invention to be compared with a previously known system. The conventional correlation system is represented in the left hand side of the Figure at A, and a moving body 1 in direction 2 is assumed to carry a downward looking television camera 3, which views the ground 4, which constitutes its surroundings, as it passes over it. The field of view 5 of the television camera 3 is determined by the viewing angle $\alpha$ which is chosen so as to achieve the best possible optical resolution in relation to the distance between the camera 3 and the ground 4. The reference area 6 is very much larger than the field of view 5 and represents an area which is stored at the body 1, in the form of digital binary data. The body 1 also includes a correlator which compares the viewed scene 5 with a reference data 6 until it finds a sufficiently good match. When a good match is found, it is assumed that the position of the field of view 5 within the larger reference area 6 has been precisely determined. If the linear dimension of the field of view 5 is Q and the linear dimension of the reference area 6 is P and that, by way of example, P = 4Q, then the maximum distance by which the reference area 5 can depart from a predetermined path 7 is given in general by (P − Q)/2 and in this particular example by 3Q/2.

By way of comparison this principle of the system is illustrated in the right hand side of Figure 1, at B, where the optical system is assumed to be identical, i.e. the body 1 carries a television camera 3 having an angle field of view and it moves in the direction 2. The field of view 8 of the television camera still has a linear dimension Q, but the size of the reference area 9 stored within the body 1 has a very small linear dimension P. Assuming that now P = Q/4 then the maximum permissible deviation of the body 1 from the path 7 is given by 3Q/8 if the position of the body 1 is to be found by correlation with the reference area 9.

Thus the tolerance of the system to lateral drift or displacement is very much less than is the case represented by A in Figure 1. However, it possesses the advantage that the correlation process is very much easier to accomplish in that the incoming television video signal can be compared relatively easily with the very small quantity of reference data which characterises area 9. Furthermore, the actual location of the reference area 9 can be chosen so that it encompasses just one very distinctive visual feature. This is in contrast with the previous system, as exemplified by A where the incoming video information from the camera 3 has to be compared with an extremely large data base as represented by the area 6 and which may contain only few distinctive features widely spaced apart.

This reduces dramatically the amount of data which has to be stored and handled, thereby allowing the correlation to be accomplished in a realistically short period of time, i.e. the position of the body can be determined before it has moved very far to a different position as can be seen also in the prior art document DE—A—2914693 cited before. Thus corrective action to bring the body on to a required path can be taken much more rapidly and with greater certainty of accuracy.

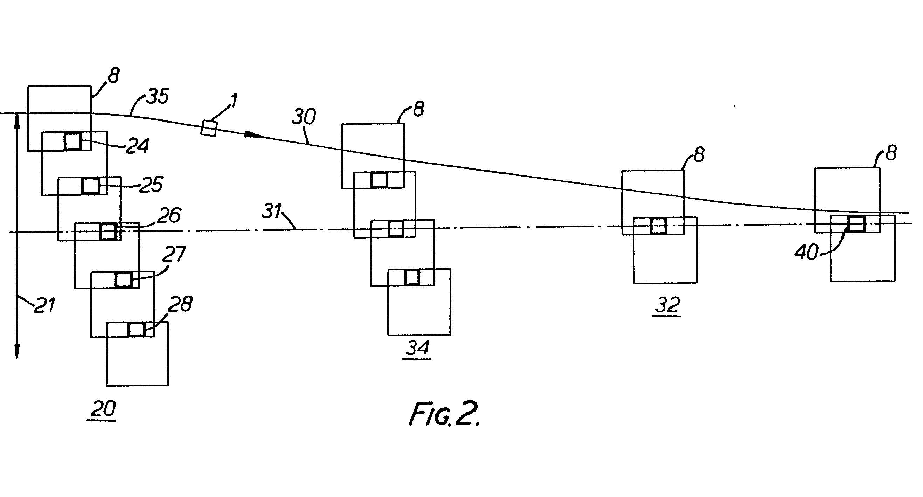

Figure 2 illustrates a multi-channel correlation system which, according to the invention, enables the capture distance of the body to be made very great, in principle as great as is necessary without unrealistically increasing the amount of reference data which has to be carried by the body. It will be seen that the multi-channel system consists of a number of separate stages which progressively direct the moving body on to the predetermined path. This aspect is of considerable practical importance since initially the position of the body 1 may be unknown, and can vary randomly between wide limits. The initial capture stage 20 has a width 21, but requires only five small reference areas 24, 25, 26, 27, 28, the details of which can easily be stored on the body 1. Thus the capture width can be made as large as necessary without unrealistically increasing the data storage requirements or imposing excessive demands on the correlator process. This aspect is in contrast to the system A represented in Figure 1, where the dimension P of reference area 6 (which represents the data storage requirement) would have to be increased to an unacceptable level.

The actual path 30 of the body 1 is indicated on Figure 2, and it is displaced from the expected path 31 leading to a predetermined location. The purpose of the system is to guide the moving body onto the path 31 (or sufficiently close to it so as to be encompassed within the field of view) by the time it reaches the location 32, so that thereafter it can be made to adhere sufficiently closely to the required path 33 by means of single, subsequent, reference areas 40, (only one of which is shown) positioned at suitable distances along the path 31.

When the actual position of the body 1 has been determined at the first capture stage 20, it is caused to change direction at point 35 and steered towards the path 31.

The second stage 34, redirects the body 1 onto the correct path, but requires only three reference areas. In practice, if the body 1 is moving very rapidly, further stages may be needed, before the body 1 can be brought sufficiently close to the path 31.

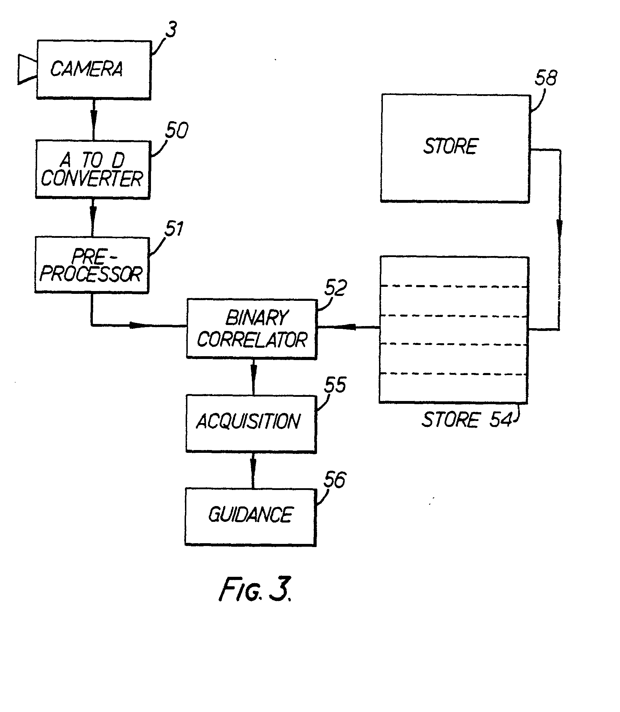

Figure 3 shows in block diagrammatic form the way in which the correlation system is implemented. The camera 3 with its field of view of the terrain over which the body is passing generates an analogue video signal in conventional manner. This analogue signal is passed via an analogue-to-digital converter 50, which generates a digital signal representing the viewed scene, to a pre-processor 51 which converts the digital signal to a two level or binary signal, i.e. the incoming digital data which represents the grey-scale content of the video signal is converted to one representing a two tone signal (e.g. black and white) from which intermediate grey tones have been removed. The digital data then passes from the pre-processor 51 and is applied to a binary correlator 52. The video information relates to the relatively large area 8 of the field o view of the camera 3 and the purpose of the binary correlator 52 is to compare the incoming digital data with relatively small reference areas held in active data stores 54 which can be readily and rapidly accessed. Binary correlators are, in themselves, known devices, and TRW devices such as type TDC 1004 or 1023 can be used.

The number of active data stores corresponds to the maximum number of individual reference areas of any given correlation stage shown in Figure 2.

The data relating to the individual reference areas shown in Figure 2 (there are ten such areas) is initially held in a large store 58, and as correlation stage 20 is approached, the data relating to reference areas 24 to 28 is read out of store 58 and loaded into the respective active stores 24, which being small can be designed so that they can be very rapidly accessed. Each reference area in a respective one of stores 54 is accessed sequentially by the binary correlator 52, typically on a line by line basis, assuming that all five reference areas occur at about the same distance along the expected approach path 31.

If the field of view 8 of the camera 3 encompasses one of the reference areas 24—28 stored within the group of stores 54, a positive correlation is found by the acquisition block 55. The position of the body 1 at the instant the appropriate field of view was viewed is compared with the position of the reference area with which correlation has been found, and an appropriate instruction is provided to the guidance block 56, so as to steer the body towards the required predetermined path 31.

As the next correlation stage 34 is approached the group of stores 54 is re-loaded from store 58 with the three references required, as shown in Figure 2. The correlation process is repeated and after a successful correlation has been achieved, the single reference area corresponding to capture stage 32 is loaded into one store of 54. The process then continues using the single reference area 40, and subsequent single reference areas (not shown) positioned at intervals along the path 31.

In Figure 2, the body 1 is shown approaching the capture stage 20 at the maximum permissible distance from the predetermined path 31 — its approach path is off-set from the predetermined path 31 by an amount such that the field of view 8 of the camera just includes the reference area 24 so that the body 1 can determine its own position. the additional areas of fields of view are indicated on this drawing, so that it can be seen that the lateral spacings of the adjacent reference areas 24 to 28 are such that each field of view includes at least one, and sometimes two, reference areas.

It is assumed that the actual path 30 of the body is sufficiently close to the required path 31 at reference stage 32 because the field of view 8 of the camera includes the single reference area which is actually on the path 31, even though the distance between the two paths is significant. This degree of accuracy is sufficient because the body 1 continues to move past stages 32 and 40 to subsequent stages (not shown), and great precision is required only at the final stage, i.e. at the ultimate destination.

Although of general application, the invention is particularly suitable for the navigation of an aircraft or missile. Conventional internal navigation systems are liable to drift, which although small, may be significant if allowed to develop uncorrected for a long period of time. This can happen if the aircraft is flying over featureless terrain, e.g. sea or desert, and in the former case the capture stage 20 shown in Figure 2 would typically represent a strip of land lying along the coastline. Thus an aircraft making a landfall at an unknown location can quickly orientate itself and be guided to its eventual destination. Once the aircraft has been successfully guided onto its required path (e.g. path 31 on Figure 2), the subsequent reference areas can be spaced apart by relatively long distances since they are needed only to enable the conventional inertial navigation system to be updated before its drift becomes too large.

**Claims**

1. A guidance system for guiding, to a predetermined location, a moving body (1) which has means for viewing its surroundings and for correlation therewith a plurality of reference locations (40), which are positioned generally along an expected approach path (31), at least some of the reference locations (24, 25, 26, 27, 28) being laterally displaced from said path, and each reference location having an effective area much smaller than the field of view (8), of the moving body's surroundings, characterised in that, the extent of the lateral displacement is reduced with decreasing distance from said predetermined location.

2. A system as claimed in claim 1 and wherein the plurality of reference locations are arranged in groups (20, 34, 32) which are relatively widely spaced apart along said expected approach path (31), with the overall lateral displacements of reference locations within given groups progressively reducing in the direction towards said predetermined location.

3. A system as claimed in claim 1 and wherein, in each group (20, 34, 32) containing a plurality of reference locations, at least one reference location lies close to or includes part of said expected approach path.

4. A system as claimed in claim 2 or 3 and wherein, as said moving body approaches a particular group of reference locations, data representative of them is compared with said field of view until correlation therewith is obtained, and wherein the direction of said moving body is modified in dependence on the result of said correlation so as to direct it towards the next group in a direction converting with said expected approach path.

5. A system as claimed in claim 2, 3 or 4 and wherein, in each group containing a plurality of reference locations, the individual reference locations are displaced from each other in the direction of the expected approach path by amounts which are small as compared with maximum lateral displacement within that group.

## Patentansprüche

1. Leitsystem, um einen sich bewegenden Körper (1) zu einem vorbestimmten Ort zu führen, wobei der Körper Mittel zum Betrachten seiner Umgebung und zum Korrelieren einer Vielzahl von Referenzorten (40), die allgemein längs eines erwarteten Annäherungsweges (31) angeordnet sind, mit dieser besitzt, wobei mindestens einige der Referenzorte (24, 25, 26, 27, 28) in Seitenrichtung von dem Weg abgesetzt sind und jeder Referenzort eine effektive Flächengröße besitzt, die viel kleiner als das Blickfeld (8) der Umgebung des sich bewegenden Körpers ist, dadurch gekennzeichnet, daß das Ausmaß der Seitenrichtungs-Versetzung mit abnehmendem Abstand von dem vorbestimmten Ort reduziert ist.

2. System nach Anspruch 1 und bei dem die Vielzahl von Referenzorten in Gruppen (20, 34, 32) angeordnet ist, die relativ großen Abstand längs des erwarteten Annäherungsweges (31) aufweisen, wobei die Gesamt-Seitenrichtungsversetzung von Referenzorten innerhalb bestimmter Gruppen in Richtung zu dem vorbestimmten Ort hin fortschreitend abnimmt.

3. System nach Anspruch 1 und bei dem in jeder eine Vielzahl von Referenzorten enthaltenden Gruppe (20, 34, 32) mindestens ein Referenzort dicht bei dem erwarteten Annäherungsweg liegt oder einen Teil dieses Weges enthält.

4. System nach Anspruch 2 oder 3 und bei dem, während der sich bewegende Körper sich einer bestimmten Gruppe von Referenzorten nähert, für diese repräsentative Daten mit dem Blickfeld verglichen werden, bis eine Korrelierung mit diesen erzielt ist, und bei dem die Richtung des sich bewegenden Körpers in Abhängigkeit von dem Ergebnis der Korrelierung so abgeändert wird, daß er zu der nächsten Gruppe hin in einer mit dem erwarteten Annäherungsweg konvergierenden Richtung geleitet wird.

5. System nach Anspruch 2, 3 oder 4 und bei dem in jeder eine Vielzahl von Referenzorten enthaltenden Gruppe die einzelnen Referenzorte voneinander in Richtung des erwarteten Annäherungsweges Abstände aufweisen, deren Größe im Vergleich zu der maximalen Seitenrichtungsverzetzung innerhalb dieser Gruppe klein ist.

## Revendications

1. Système de guidage permettant de guider, jusqu'en un emplacement prédéterminé, un corps mobile (1) qui possède un moyen servant à observer son environnement et afin de mettre en corrélation avec celui-ci plusieurs emplacements de référence (40), qui sont placés généralement le long d'une trajectoire d'approche attendue (31), au moins certains des emplacements de référence (24, 25, 26, 27, 28) étant latéralement écartés de ladite trajectoire, et chaque emplacement de référence possédant une aire effective plus petite que le champ visuel (8), de l'environnement du corps mobile, caractérisé en ce que l'étendue de l'écartement latéral diminue lorsque la distance audit emplacement prédéterminé diminue.

2. Système selon la revendication 1, où les différents emplacements de référence sont disposés en groupes (20, 34, 32) qui sont écartés les uns des autres de manière relativement large le long de ladite trajectoire d'approche attendue (31), les déplacement latéraux globaux des emplacements de référence à l'intérieur de groupes donnés se réduisant progressivement en direction dudit emplacement prédéterminé.

3. Système selon la revendication 1, où, dans chaque groupe (20, 34, 32) contenant plusieurs emplacements de référence, au moins un emplacement de référence se trouve à proximité de ladite trajectoire d'approche attendue ou contient une partie de cette dernière.

4. Système selon la revendication 2 ou 3, où, lorsque ledit corps mobile s'approche d'un groupe particulier d'emplacements de référence, des données représentatives de ceux-ci sont comparées avec ledit champ visuel jusqu'à ce qu'une corrélation soit obtenue avec celui-ci, et où la direction dudit corps mobile se modifie en fonction du résultat de ladite corrélation de manière à le diriger vers le groupe suivant dans une direction qui converge avec ladite trajectoire d'approche attendue.

5. Système selon la revendication 2, 3 ou 4, où, dans chaque groupe contenant plusieurs emplacements de référence, les emplacements de référence particuliers sont écartés les uns des autres suivant la direction de la trajectoire d'approche attendue par des quantités qui sont petites par comparaison avec l'écartement latéral maximal existant à l'intérieur de ce groupe.

FIG. 1.

FIG.2.

FIG. 3.